# EUROPÄISCHE PATENTSCHRIFT

(11) **EP 2 360 424 B1**
(45) Veröffentlichungstag und Bekanntmachung des Hinweises auf die Patenterteilung: **21.03.2012**
(21) Anmeldenummer: 11000610.3
(22) Anmeldetag: 26.01.2011
(51) Int. Cl.: F21S 8/12, B60Q 1/00, F21V 29/00, H05B 33/08

(54) **Beleuchtungseinrichtung eines Kraftfahrzeuges**
Illumination device of a motor vehicle
Dispositif d'éclairage d'un véhicule automobile

(30) Priorität: 16.02.2010 DE 202010002406 U
(43) Veröffentlichungstag der Anmeldung: 24.08.2011
(73) Patentinhaber: Automotive Lighting Reutlingen GmbH, 72762 Reutlingen (DE)
(72) Erfinder: Riehle, Andreas, 72766 Reutlingen (DE)
(74) Vertreter: Dreiss

(56) Entgegenhaltungen:
- WO-A1-2006/063552
- DE-U1- 29 811 417
- DE-U1-202010 005 910
- US-A1- 2003 031 028

## Beschreibung

Die vorliegende Erfindung betrifft eine Beleuchtungseinrichtung eines Kraftfahrzeugs mit einem DC-/ DC-Wandler zum Betreiben mindestens einer in der Beleuchtungseinrichtung angeordneten Halbleiterlichtquelle. Die mindestens eine Halbleiterlichtquelle und der DC-/DC-Wandler sind dabei auf einer Platine angeordnet, die ihrerseits an einem Kühlkörper angeordnet ist.

Aus dem Stand der Technik sind verschiedenartige Beleuchtungseinrichtungen für Fahrzeuge bekannt. So unterscheidet man zunächst zwischen Scheinwerfern und Leuchten. Scheinwerfer sind ausschließlich im Frontbereich eines Fahrzeugs angeordnet. Sie dienen neben einer Erhöhung der Verkehrssicherheit durch eine Sichtbarmachung des Fahrzeugs für andere Verkehrsteilnehmer insbesondere der Ausleuchtung der Fahrbahn vor dem Fahrzeug, insbesondere in Form von Abblendlicht, Fernlicht, Nebellicht oder einer beliebig anderen Lichtverteilung, um die Sicht für den Fahrer zu verbessern. Scheinwerfer können als Lichtquelle eine oder mehrere Glühlampen, Gasentladungslampen, Halbleiterlichtquellen oder beliebig andere Lichtquellen aufweisen. Die Scheinwerfer umfassen mindestens ein Lichtmodul, das nach einem Reflexionsprinzip, also mit einem zur Lichtquelle hin verspiegelten Reflektor, wobei das von der Lichtquelle ausgesandte Licht zur Erzeugung der gewünschten Lichtverteilung auf die Fahrbahn vor das Fahrzeug reflektiert wird, und/oder nach einem Projektionsprinzip arbeitet, also mit zusätzlich einer Projektionslinse, welche das reflektierte Licht zur Erzeugung der gewünschten Lichtverteilung auf die Fahrbahn vor das Fahrzeug projiziert.

Neben Scheinwerfern sind Fahrzeugleuchten bekannt, die überwiegend der Verkehrssicherheit durch Sichtbarmachung des Fahrzeugs für andere Verkehrsteilnehmer dienen. So werden Bugleuchten im Frontbereich des Fahrzeugs bspw. zur Erzeugung eines Positionslichts, Blinklichts, Tagfahrlichts oder einer beliebig anderen Leuchtenfunktion, und Heckleuchten im Heckbereich des Fahrzeugs bspw. zur Erzeugung eines Bremslichts, Rücklichts, Blinklichts, Positionslichts, Rückfahrlichts oder einer beliebig anderen Leuchtenfunktion und seitlich am Fahrzeug bspw. zur Erzeugung eines Blinklichts, seitlichen Positionslichts (sog. Sidemarkerfunktion) oder einer beliebig anderen Leuchtenfunktion eingesetzt. Sowohl Bugleuchte als auch Heckleuchte kann zur Realisierung einer oder mehrerer Leuchtenfunktionen ausgebildet sein. Als Lichtquellen weisen Leuchten üblicherweise Glühlampen oder Halbleiterlichtquellen (LEDs) auf und arbeiten bevorzugt nach dem Reflexionsprinzip.

Beleuchtungseinrichtungen, die Halbleiterlichtquellen aufweisen, werden in der Regel über einen DC-/DC-Wandler (auch Gleichstromsteller) betrieben. Der DC-/DC-Wandler wandelt eine Batteriespannung (Gleichspannung) in eine Versorgungsspannung für die Halbleiterlichtquellen um. Dabei kann der DC-/DC-Wandler als Abwärtswandler (Hochsetzsteller), Aufwärtswandler (Tiefsetzsteller) oder Inverter (Sperrsteller) ausgebildet sein. Das Transformieren der Batteriespannung in die Versorgungsspannung erfolgt durch periodisches Schalten. Die Größe der transformierten Versorgungsspannung kann dabei abhängig von der gewünschten Lichtverteilung, die durch die Halbleiterlichtquellen erzielt werden soll, von den elektrischen Eigenschaften, dem Typ und dem Alter bzw. der bisherigen Betriebsdauer der Halbleiterlichtquellen abhängig sein.

Aus dem Stand der Technik sind mit den Halbleiterlichtquellen und dem DC-/DC-Wandler einseitig bestückte Platinen bekannt, auf deren Rückseite ein großer Kühlkörper zur Wärmeableitung platziert ist. Die Platine und insbesondere der DC-/DC-Wandler ist dabei ohne ein abschirmendes Gehäuse in der Beleuchtungseinrichtung platziert. Es sind allenfalls Sichtblenden vor der Platine angeordnet, um sie bzw. den DC-/DC-Wandler vor Blicken von außen durch die Abdeckscheibe der Beleuchtungseinrichtung zu schützen. Durch das periodische Ein- und Ausschalten erzeugt der DC-/DC-Wandler ein störendes elektromagnetisches Feld, das sich negativ auf die elektromagnetische Verträglichkeit (EMV) gegenüber anderen elektronischen Einrichtungen in der Beleuchtungseinrichtung bzw. im Kraftfahrzeug auswirken kann.

Darüber hinaus können bei der einseitig bestückten Platine die Halbleiterlichtquellen nicht an beliebigen Stellen angeordnet werden. Vielmehr gibt es auf der Platine gewisse Sperrzonen, wo Platz für den DC-/DC-Wandler vorgesehen werden muss und wo keine Halbleiterlichtquellen angeordnet werden können. Dadurch ist die Designfreiheit bezüglich einer Anordnung der Halbleiterlichtquellen und damit bezüglich eines äußeren Erscheinungsbildes der eingeschalteten Beleuchtungseinrichtung beschränkt.

Aus WO 2006/063552 ist eine gattungsgemaße Beleuchtungseinrichtung bekannt.

Aufgabe der Erfindung ist es, die elektromagnetische Verträglichkeit der Beleuchtungseinrichtung zu verbessern, indem das von dem DC-/DC-Wandler ausgehende elektromagnetische Feld möglichst einfach und effektiv abgeschirmt wird. Gleichzeitig soll die Beleuchtungseinrichtung kompakt aufgebaut sein und die Wärmeableitung im Bereich der Halbleiterlichtquellen verbessert werden.

Die Aufgabe wird erfindungsgemäß dadurch gelöst, dass der DC-/DC-Wandler und die mindestens eine Halbleiterlichtquelle auf unterschiedlichen Seiten der Platine angeordnet sind. Damit ergibt sich eine erste Seite der Platine, die nur mit der mindestens einen Halbleiterlichtquelle bestückt ist, wobei diese Seite der Platine in Lichtaustrittsrichtung der Beleuchtungseinrichtung zeigt. Die andere Seite der Platine (entgegen der Lichtaustrittsrichtung) ist mit dem DC-/DC-Wandler bestückt und zeigt vorzugsweise zum dort angeordneten Kühlkörper. Durch die beidseitige Bestückung der Platine ist eine bessere Platzausnutzung der Platine gewährleistet. Die Platine und damit auch die gesamte Beleuchtungseinrichtung kann dadurch kleiner dimensioniert werden. Darüber hinaus können die Halbleiterlichtquellen an einer beliebigen Position auf der ersten Seite der Platine angeordnet werden, wodurch sich eine besonders große Designfreiheit ergibt. Die Halbleiterlichtquellen und der DC-/DC-Wandler können auf der Platine durchkontaktiert werden, um auf einfache Weise eine elektrische Verbindung zwischen beiden herzustellen. Dies führt zu einer Kostensenkung und auch zu wesentlich mehr Freiraum beim Design der Beleuchtungseinrichtung.

Der Erfindung liegt darüber hinaus die Idee zu Grunde, die Geometrie des Kühlkörpers zumindest teilweise an die Form und Abmessungen des DC-/DC-Wandlers anzupassen, damit der DC-/DC-Wandler zumindest teilweise vom Kühlerkörper umschlossen ist bzw. von diesem aufgenommen ist. Der bevorzugt metallisch ausgestaltete Kühlkörper kann dadurch einen Beitrag zur elektromagnetischen Abschirmung des DC-/DC-Wandlers leisten. Dazu weist der Kühlkörper an einer zur Platine zeigenden Seite eine Aussparung zur Aufnahme des DC-/DC-Wandlers auf und umschließt damit den DC-/DC-Wandler vorzugsweise von fünf Seiten.

Die Aussparung ist dabei derart ausgebildet, dass mindestens eine Fläche der Aussparung des Kühlkörpers an Oberflächen von Bauteilen des DC-/DC-Wandlers anliegt. Dabei wird ein besonders guter Wärmeübergang von den Oberflächen der Bauteile des DC-/DC-Wandlers zum Kühlkörper erreicht. Der Kühlkörper kann so die Wärme sehr effizient von den elektronischen Komponenten des DC-/DC-Wandlers ableiten, was dazu führt, dass der Kühlkörper insgesamt kleiner ausfallen kann. Dies und die oben genannte kleinere Dimensionierungsmöglichkeit der Platine führen vorteilhafterweise zu einer Gewichts- und Platzreduktion der gesamten erfindungsgemäßen Beleuchtungseinrichtung.

Um die Platzreduktion und die elektromagnetische Abschirmung weiter zu verbessern, ist vorteilhaft, dass ein Bereich des Kühlkörpers jenseits der Aussparung an der Platine anliegt.

Weiterhin ist vorteilhaft, dass auf einer Seite der Platine, bevorzugt auf der von dem Kühlkörper abgewandten Seite der Platine, eine metallische Beschichtung ausgebildet ist. Durch die metallische Beschichtung sind die Bauteile des DC-/DC-Wandlers jetzt nach allen sechs Seiten abgeschirmt, wodurch die Auswirkungen des durch den DC-/DC-Wandler erzeugten elektromagnetischen Felds auf ein Minimum reduziert werden kann. Weiterhin kann die metallische Beschichtung derart ausgebildet sein, dass sie als Sichtblende genutzt werden kann, so dass die Verwendung einer zusätzlichen Sichtblende (wie dies beim Stand der Technik erforderlich war) nicht erforderlich ist. Dadurch entfällt ein Bauteil (zusätzliche Sichtblende) der Beleuchtungseinrichtung und können Designanforderungen von Kunden leichter und kostengünstiger berücksichtigt werden. Es ist denkbar, dass die Halbleiterlichtquellen auf der Platine etwas vertieft angeordnet sind. Dabei kann die metallische Beschichtung der Platine bzw. Teile der Beschichtung auch Reflexions- oder Bündelungsoptiken für die Halbleiterlichtquellen bilden. Dies führt zu einer weiteren Verringerung der Anzahl der Bauteile, da auf zusätzliche Bündelungsoptiken (z.B. Reflektoren, totalreflektierende Vorsatzoptiken etc.) verzichtet werden kann.

Vorteilhaft ist außerdem, dass die im Kühlkörper ausgebildete Aussparung mit einem in erwärmten Zustand fließfähigen und bei Zimmertemperatur ausgehärtetem Material vergossen ist, das die Bauteile des in der Aussparung angeordneten DC-/DC-Wandlers umschließt. Bevorzugt ist dabei ein gut wärmeleitendes Material. Dadurch kann die Wärmeableitung von den Bauteilen des DC-/DC-Wandlers verbessert werden. Außerdem verbessert sich die mechanische Stabilität der Anordnung. Unter Umständen kann sogar auf separate Befestigungsmittel zur Befestigung der Platine auf dem Kühlkörper verzichtet werden.

Weitere Vorteile ergeben sich aus der nachfolgenden Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Figuren dargestellt und werden in der nachfolgenden Beschreibung näher erläutert. Es zeigen, jeweils in schematischer Form:
- Figur 1: eine erfindungsgemäße Beleuchtungseinrichtung gemäß einer bevorzugten Ausführungsform; und
- Figur 2: eine bestückte Platine einer erfindungsgemäßen Beleuchtungseinrichtung gemäß einer bevorzugten Ausführungsform.

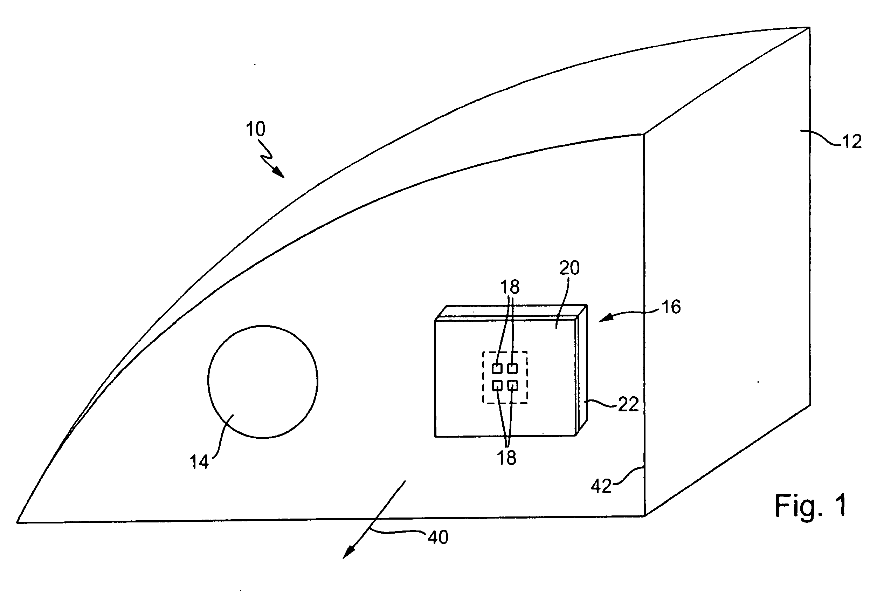

Figur 1 zeigt eine erfindungsgemäße Beleuchtungseinrichtung 10 eines Kraftfahrzeugs in einer perspektivischen Ansicht, die in dem dargestellten Ausführungsbeispiel als Scheinwerfer ausgebildet ist. Selbstverständlich kann die Beleuchtungseinrichtung auch als eine Fahrzeugleuchte ausgestaltet sein. Die Beleuchtungseinrichtung 10 umfasst ein Gehäuse 12, in welchem ein beliebiges erstes Lichtmodul 14, bspw. zur Erzeugung einer Abblendlicht-, Fernlicht- und/oder einer beliebig anderen Lichtverteilung, angeordnet ist. Selbstverständlich kann der Scheinwerfer 10 noch weitere Lichtmodule zur Erzeugung weiterer Lichtfunktionen aufweisen. Das Lichtmodul 14 kann als ein Reflexions- oder Projektionsmodul ausgebildet sein. Es ist auch denkbar, dass das Lichtmodul 14 eine Kombination aus Reflexions- und Projektionsmodul umfasst. Als Lichtquellen des Lichtmoduls 14 können eine oder mehrere Glühlampen, Gasentladungslampen oder Halbleiterlichtquellen eingesetzt werden.

Des weiteren ist in dem Gehäuse 12 ein weiteres Lichtmodul 16 angeordnet. Dieses weist mehrere Halbleiterlichtquellen (z.B. LEDs) 18 auf und wird deshalb auch als LED-Modul bezeichnet. Es dient vorzugsweise zur Erzeugung einer vom Lichtmodul 14 abweichenden Lichtfunktion. Selbstverständlich ist es auch denkbar, dass eine bestimmte Lichtfunktion durch ein Zusammenwirken des ersten Lichtmoduls 14 und des LED-Moduls 16 erzeugt wird. Die LEDs 18 sind auf einer Platine 20 angeordnet. Die Anzahl und Anordnung der LEDs 18 auf der Platine 20 ist beliebig und wird den Erfordernissen an eine Lichtfunktion, eine Beleuchtungsstärke und an das Design angepasst. Entgegen einer Lichtaustrittsrichtung 40 der Beleuchtungseinrichtung 10 ist auf der Platine 20 ein Kühlkörper 22 angeordnet. In dem dargestellten Ausführungsbeispiel weisen die Platine 20 und der Kühlkörper 22 die gleiche Höhe und Breite auf. Selbstverständlich können sie sich in Höhe und Breite auch unterscheiden. Leitungen für eine Energieversorgung der Lichtmodule 14, 16 sowie zur Ansteuerung der Lichtmodule sind in Figur 1 nicht dargestellt. Ebenfalls nicht dargestellt ist eine lichtdurchlässige Abdeckscheibe, welche eine in Lichtaustrittsrichtung 40 in dem Gehäuse 12 vorgesehene Lichtaustrittsöffnung 42 verschließt.

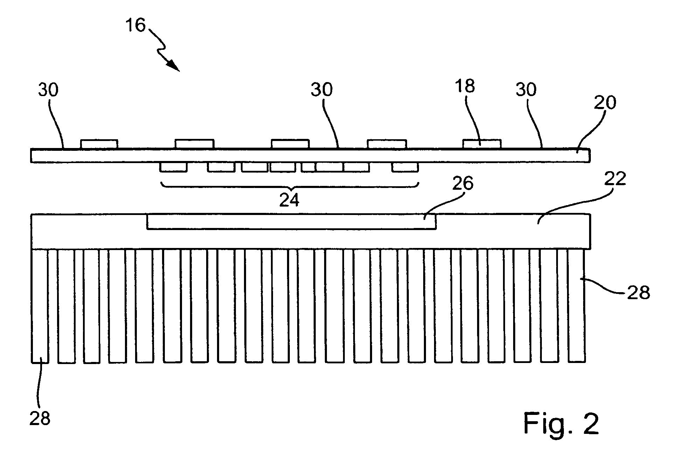

Figur 2 zeigt das Lichtmodul 16 im Detail gemäß einer bevorzugten Ausführungsform. Die Platine 20 ist auf einer ersten Seite mit den LEDs 18 bestückt, der Kühlkörper 22 ist in einem Abstand zu der gegenüberliegenden Seite der Platine 20 dargestellt. Ein DC-/DC-Wandler 24, der zum Betreiben der LEDs 18 nötig ist, umfasst verschiedene elektrische und elektronische Bauteile, die in Figur 2 symbolisch durch Kästchen dargestellt sind. Die den DC-/ DC-Wandler 24 bildenden Bauteile sind auf der den LEDs 18 gegenüber liegenden Seite der Platine 20 angeordnet. Der DC-/DC-Wandler 24 umfasst bspw. in der Ausgestaltung eines T-Glieds eine Magnetspule, eine Diode und einen Schalter und wandelt eine Batteriespannung (Gleichspannung) durch ein periodisches Ein- und Ausschalten der Spannung um, so dass am Ausgang des DC-/DC-Wandlers im arithmetischen Mittel ein anderer Spannungswert zur Versorgung der LEDs 18 anliegt. Der DC-/DC-Wandler 24 arbeitet quasi als Transformator für Gleichspannungen.

Der Kühlkörper 22 weist an der zur Platine 20 zeigenden Seite eine Aussparung 26 auf. Auf der der Aussparung 26 gegenüberliegenden Seite sind mehrere, zur Längserstreckung des Kühlkörpers 22 vorzugsweise orthogonal und parallel zueinander verlaufende Kühlrippen 28 oder Kühlstifte ausgebildet. Die Aussparung 26 ist derart angeordnet, ausgebildet und dimensioniert, dass sie die Bauteile des DC-/DC-Wandlers 24 nach einem Zusammenfügen der Platine 20 mit dem Kühlkörper 22 vollständig aufnehmen kann. Vorzugsweise stehen dabei Oberflächen der Bauteile des DC-/DC-Wandlers 24 in Kontakt mit einer Fläche der Aussparung 26. Durch die Aufnahme des DC-/DC-Wandlers 24 in der Aussparung 26 wird eine besonders gute Abschirmung eines durch den DC-/DC-Wandler 24 erzeugten elektromagnetischen Feldes erzielt, und damit eine besonders gute EMV-Verträglichkeit.

Ein Abschnitt des Kühlkörpers 22 jenseits der Aussparung 26 liegt vorzugsweise vollflächig und eben an den entsprechenden Bereichen der Platine 20 neben dem DC-/DC-Wandler 24 an. Zusätzlich kann die Aussparung 26 mit einem in erwärmtem Zustand fließfähigen und bei Zimmertemperatur ausgehärteten Material vergossen sein, das die Bauteile des DC-/DC-Wandlers 24 umschließt (nicht dargestellt). Dieses Material ist vorzugsweise besonders gut wärmeleitefähig.

Die Platine 20 weist zusätzlich auf der mit den LEDs 18 bestückten Seite eine metallische Beschichtung 30 auf. Alternativ oder zusätzlich kann die metallische Beschichtung 30 auch auf der gegenüber liegenden Seite der Platine 20, auf der der DC-/DC-Wandler 24 angeordnet ist, aufgetragen sein. Die metallische Beschichtung 30 bewirkt eine verbesserte Abschirmung des durch den DC-/DC-Wandler 24 erzeugten elektromagnetischen Feldes.

Da der DC-/DC-Wandlers 24 durch die Aussparung 26 im Kühlkörper 22 und die metallische Beschichtung 30 der Platine 20 nach allen sechs Seiten vollständig abgeschirmt ist, wird das vom DC-/DC-Wandler 24 ausgesandte elektromagnetische Feld stark abgeschwächt. Der DC-/DC-Wandler 24 weist damit gegenüber anderen elektronischen Einrichtungen der Beleuchtungseinrichtung 10 sowie des Kraftfahrzeugs eine besonders gute EMV-Verträglichkeit auf. Weiterhin kann die metallische Beschichtung 30 derart ausgebildet sein, dass sie gleichzeitig als Sichtblende des LED-Moduls 16 genutzt werden kann. Durch den Kontakt der Bauteile des DC-/DC-Wandlers 24 mit dem Kühlkörper 22 in der Aussparung 26 kann der Kühlkörper 22 die Wärme von den elektronischen Komponenten des DC-/DC-Wandlers 24 besonders gut ableiten. Dies kann durch das vergossene Material in der Aussparung 26 noch gesteigert werden, wobei noch zusätzlich die Stabilität der Anordnung verbessert wird.

## Patentansprüche

1. Beleuchtungseinrichtung (10) eines Kraftfahrzeugs mit einem DC-/DC-Wandler (24) zum Betreiben mindestens einer in der Beleuchtungseinrichtung (10) angeordneten Halbleiterlichtquelle (18), wobei die mindestens eine Halbleiterlichtquelle (18) und der DC-/DC-Wandler (24) auf einer Platine (20) angeordnet sind und die Platine (20) an einem Kühlkörper (22) angeordnet ist, **dadurch gekennzeichnet, dass** der DC-/DC-Wandler (24) und die mindestens eine Halbleiterlichtquelle (18) auf unterschiedlichen Seiten der Platine (20) angeordnet sind.

2. Beleuchtungseinrichtung (10) nach Anspruch 1, **dadurch gekennzeichnet, dass** der Kühlkörper (22) eine Aussparung (26) zur Aufnahme des DC-/DC-Wandlers (24) aufweist.

3. Beleuchtungseinrichtung (10) nach Anspruch 2, **dadurch gekennzeichnet, dass** mindestens eine Fläche der Aussparung (26) des Kühlkörpers (22) an Oberflächen von Bauteilen des DC-/DC-Wandlers (24) anliegt.

4. Beleuchtungseinrichtung (10) nach Anspruch 2 oder 3, **dadurch gekennzeichnet, dass** ein Bereich des Kühlkörpers (22) jenseits der Aussparung (26) an der Platine (20) anliegt.

5. Beleuchtungseinrichtung (10) nach einem der vorhergehenden Ansprüche, **dadurch gekennzeichnet, dass** auf einer Seite der Platine (20) eine metallische Beschichtung (30) ausgebildet ist.

6. Beleuchtungseinrichtung (10) nach Anspruch 5, **dadurch gekennzeichnet, dass** die metallische Beschichtung (30) auf der von dem Kühlkörper (22) abgewandten Seite der Platine (20), auf der die mindestens eine Halbleiterlichtquelle (18) angeordnet ist, ausgebildet ist.

7. Beleuchtungseinrichtung (10) nach einem der Ansprüche 2 bis 6, **dadurch gekennzeichnet, dass** die Aussparung (26) mit einem in erwärmtem Zustand fließfähigen und bei Zimmertemperatur ausgehärtetem Material vergossen ist.

8. Beleuchtungseinrichtung (10) nach Anspruch 7, **dadurch gekennzeichnet, dass** das im erwärmten Zustand fließfähige und bei Zimmertemperatur ausgehärtete Material gut wärmeleitend ist.

## Claims

1. A lighting device (10) of a motor vehicle, having a DC/DC converter (24) for operating at least one semiconductor light source (18) located in the lighting device (10), the at least one semiconductor light source (18) and the DC/DC converter (24) being located on a circuit board (20), and the circuit board (20) being located on a heat sink (22), **characterized in that** the DC/DC converter (24) and the at least one semiconductor light source (18) are located on different sides of the circuit board (20).

2. The lighting device (10) as defined by claim 1, **characterized in that** the heat sink (22) has a recess (26) for receiving the DC/DC converter (24).

3. The lighting device (10) as defined by claim 2, **characterized in that** at least one face of the recess (26) of the heat sink (22) rests on surfaces of components of the DC/DC converter (24).

4. The lighting device (10) as defined by claim 2 or 3, **characterized in that** one region of the heat sink (22) is located on the far side of the recess (26) on the circuit board (20).

5. The lighting device (10) as defined by one of the foregoing claims, **characterized in that** a metal coating (30) is embodied on one side of the circuit board (20).

6. The lighting device (10) as defined by claim 5, **characterized in that** the metal coating (30) is embodied on the side of the circuit board (20) remote from the heat sink (22), on which side the at least one semiconductor light source (18) is located.

7. The lighting device (10) as defined by one of claims 2-6, **characterized in that** the recess (26) is cast, using a material which is flowable in the heated state and is hardened at room temperature.

8. The lighting device as defined by claim 7, **characterized in that** the material which is flowable in the heated state and is hardened at room temperature is a good heat conductor.

## Revendications

1. Dispositif d'éclairage (10) d'un véhicule automobile, ayant un convertisseur continu/continu (24) pour l'alimentation d'au moins une source lumineuse à semi-conducteurs (18) placée dans le dispositif d'éclairage (10), dans lequel la au moins une source lumineuse à semi-conducteurs (18) et le convertisseur continu/continu (24) sont disposés sur une platine (20) et la platine (20) est agencée sur un dissipateur de chaleur (22), **caractérisé en ce que** le convertisseur continu/continu (24) et la au moins une source lumineuse à semi-conducteurs (18) sont disposés sur des faces différentes de la platine (20).

2. Dispositif d'éclairage (10) selon la revendication 1, **caractérisé en ce que** le dissipateur de chaleur (22) présente un évidement (26) destiné au logement du convertisseur continu/continu (24).

3. Dispositif d'éclairage (10) selon la revendication 2, **caractérisé en ce qu'**au moins une aire de l'évidement (26) du dissipateur de chaleur (22) repose sur des surfaces d'éléments du convertisseur continu/continu (24).

4. Dispositif d'éclairage (10) selon la revendication 2 ou 3, **caractérisé en ce qu'**une zone du dissipateur de chaleur (22) repose au-delà de l'évidement (26) sur la platine (20).

5. Dispositif d'éclairage (10) selon l'une des revendications précédentes, **caractérisé en ce que** sur une face de la platine (20) est formé un revêtement métallique (30).

6. Dispositif d'éclairage (10) selon la revendication 5, **caractérisé en ce que** le revêtement métallique (30) est formé sur la face de la platine (20) opposée au dissipateur de chaleur (22), sur laquelle est placée la au moins une source lumineuse à semi-conducteurs (18).

7. Dispositif d'éclairage (10) selon l'une des revendications 2 à 6, **caractérisé en ce que** l'évidement (26) est tapissé par coulée d'une matière fluide à l'état chauffé et durcie à température ambiante.

8. Dispositif d'éclairage (10) selon la revendication 7, **caractérisé en ce que** la matière fluide à l'état chauffé et durcie à température ambiante, est bien conductrice de la chaleur.
